(19) Europäisches Patentamt / European Patent Office / Office européen des brevets

(11) **EP 4 730 161 A1**

(12) **EUROPEAN PATENT APPLICATION**
published in accordance with Art. 153(4) EPC

(43) Date of publication:
**22.04.2026 Bulletin 2026/17**

(21) Application number: **23951435.9**

(22) Date of filing: **05.09.2023**

(51) International Patent Classification (IPC):
*G06F 17/14* *(2006.01)*

(52) Cooperative Patent Classification (CPC):
**G06F 17/14**

(86) International application number:
**PCT/JP2023/032300**

(87) International publication number:
**WO 2025/052531 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventor: **YAMAOKA, Tomoya**
**Tokyo 100-8310 (JP)**

(74) Representative: **Mewburn Ellis LLP**
**Aurora Building**
**Counterslip**
**Bristol BS1 6BX (GB)**

(54) **SIGNAL PROCESSING DEVICE AND SIGNAL PROCESSING METHOD**

(57) A signal processing device (100) that performs time frequency analysis on a signal includes: a phase multiplication unit (110) to perform a plurality of phase multiplications on a received signal; and a signal addition unit (120) to add signals obtained by the plurality of phase multiplications depending on a synthesis zone obtained by synthesizing a time zone related to the time frequency analysis to be executed with respect to the signal.

**FIG. 1**

**Description**

TECHNICAL FIELD

The technology of the present disclosure relates to a signal processing technology of performing time frequency analysis on a signal.

BACKGROUND ART

Time frequency analysis (generally, "time frequency analysis" is also referred to as "time-frequency analysis".) is a signal analysis method that makes it possible to estimate temporal fluctuation of a frequency component of a signal (fluctuation of a frequency component corresponding a lapse of time).

As typical processing of such time frequency analysis, wavelet transform is known. Furthermore, as transformation processing related to a wavelet transform, transformation processing called a wavelet packet is known (Non-Patent Literature 1).

While, as for a high frequency component of a signal, a sampling interval in a frequency domain becomes wider in a case of wavelet transform, a sampling interval (hereinafter also referred to as a "frequency sampling interval".) in the frequency domain is fixed in a case of a wavelet packet.

In a case of wavelet transform or a wavelet packet, as for a low frequency component, a sampling interval in a time domain (hereinafter also described as a "time sampling interval") is wider than a time sampling interval of a high frequency component.

Here, there is disclosed a technology of making a sampling interval in a time domain finer for wavelet transform (Patent Literature 1 "wavelet transform method and wavelet transform device").

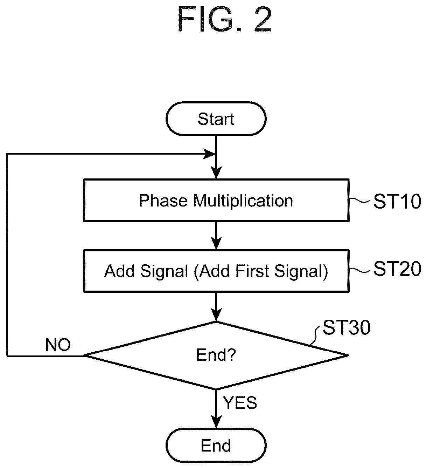

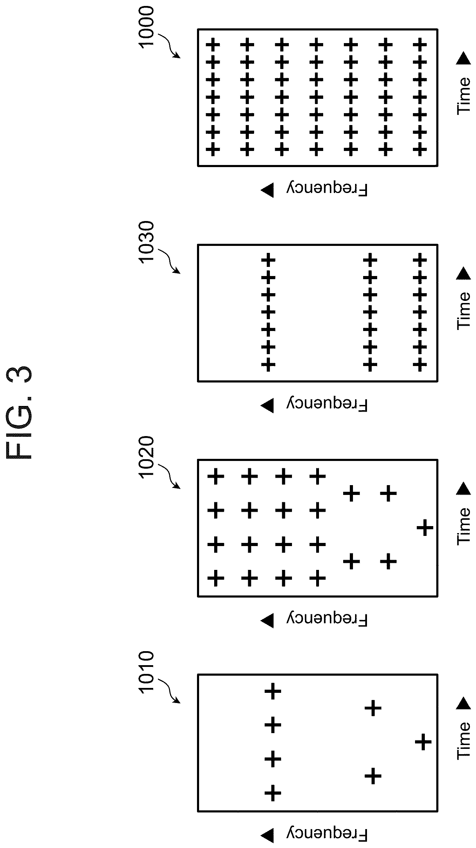

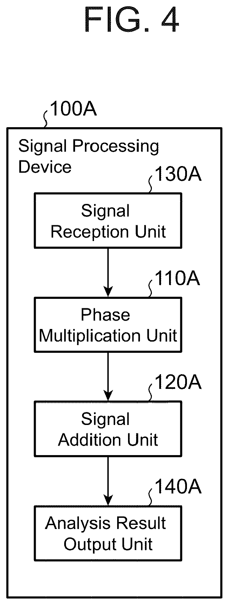

More specifically, Patent Literature 1 describes that "a wavelet transform device 1 includes an input signal import unit 10, a coefficient multiplication unit 20, a delay unit 30, and an addition unit 40". "The input signal import unit 10 samples and acquires input data per sampling cycle ST, and passes the input data to the coefficient multiplication unit 20. As illustrated in FIG. 2, the coefficient multiplication unit 20 includes multipliers 21, 22, ..., and 23 for multiplying n coefficients w0, w1, ..., and wn-1 of a basic wavelet on input data, and sends n multiplication values of the multipliers 21, 22, ..., and 23 to the delay unit 30." "The delay unit 30 includes a plurality of delay devices 31 as illustrated in FIG. 3. The delay device 31 implements delay of the sampling cycle ST, and the n multiplication values are delayed by times nST,(n-1)ST, ..., 2ST, and ST. The delayed n signals are next sent to the addition unit 40." "As illustrated in FIG. 4, the addition unit 40 includes an adder 41 that computes a total sum of n outputs from the delay unit 30." (paragraphs [0024] to [0027] of Patent Literature 1).

According to this configuration, the wavelet transform method and the wavelet transform device according to Patent Literature 1 set a time sampling interval to a fixed fine time sampling interval for wavelet transform.

CITATION LIST

NON-PATENT LITERATURE

Non-Patent Literature 1: "A review of wavelet analysis and its applications: challenges and opportunities," T. Guo, T. Zhang, E. Lim, M. Lopez-Benitez, F. Ma, and L. Yu, IEEE Access, vol. 10, pp. 58869 to 58903, June 2022.

PATENT LITERATURE

Patent Literature 1: JP 2002-103914 A

SUMMARY OF INVENTION

TECHNICAL PROBLEM

However, the conventional technology has a problem that it is difficult to implement a configuration that can change a time sampling interval together with a frequency sampling interval.

The wavelet transform method and the wavelet transform device according to Patent Literature 1 set the number of times of time sampling to a fixed value, and thus, cannot be simply extended to a frequency sampling interval, and cannot employ a configuration that makes the frequency sampling interval finer.

The present disclosure solves the above problem, and an object of the present disclosure is to provide a configuration that can change a time sampling interval together with a frequency sampling interval at a time of time frequency analysis.

SOLUTION TO PROBLEM

A signal processing device according to the present disclosure is a signal processing device that performs time frequency analysis on a signal, and includes:

a phase multiplication unit to perform a plurality of phase multiplications on a received signal; and
a signal addition unit to add signals obtained by the plurality of phase multiplications depending on a synthesis zone obtained by synthesizing a time zone related to the time frequency analysis to be executed with respect to the signal.

ADVANTAGEOUS EFFECTS OF INVENTION

The present disclosure provides an effect that it is possible to provide a configuration that can change a time sampling interval together with a frequency sampling interval at a time of time frequency analysis.

BRIEF DESCRIPTION OF DRAWINGS

FIG. 1 is a diagram illustrating a basic configuration example of a signal processing device according to the present disclosure.
FIG. 2 is a flowchart illustrating an example of basic processing of the signal processing device according to the present disclosure.
FIG. 3 is a diagram illustrating a concept of a processing result of the signal processing device according to the present disclosure, and a concept of a processing result of a conventional technique.
FIG. 4 is a diagram illustrating a configuration example of a signal processing device according to Embodiment 1 of the present disclosure.
FIG. 5 is a flowchart illustrating an example of processing of the signal processing device according to Embodiment 1 of the present disclosure.
FIG. 6 is a diagram illustrating a configuration example of a signal processing device according to Embodiment 2 of the present disclosure.
FIG. 7 is a flowchart illustrating an example of processing of the signal processing device according to Embodiment 2 of the present disclosure.
FIG. 8 is a flowchart illustrating an example of processing of a time zone information reception unit in the signal processing device according to Embodiment 2 of the present disclosure.
FIG. 9 is a flowchart illustrating a detailed example of signal addition processing in the signal processing device according to Embodiment 2 of the present disclosure.
FIG. 10 is a diagram illustrating a configuration example of a signal processing device according to Embodiment 3 of the present disclosure.
FIG. 11 is a flowchart illustrating an example of processing of the signal processing device according to Embodiment 3 of the present disclosure.
FIG. 12 is a schematic diagram illustrating a concept of processing that can be implemented by the signal processing device according to Embodiment 3 of the present disclosure.
FIG. 13 is a diagram illustrating a first example of a hardware configuration for implementing functions of the configuration according to the present disclosure.
FIG. 14 is a diagram illustrating a second example of the hardware configuration for implementing the functions of the configuration according to the present disclosure.

DESCRIPTION OF EMBODIMENTS

Hereinafter, embodiments of the present disclosure will be described with reference to the accompanying drawings to describe the present disclosure in more detail.

Embodiment 1.

Embodiment 1 will describe a basic configuration of the present disclosure, processing of the configuration, aspects including the basic configuration, and processing according to the aspects.
A basic configuration example of a signal processing device will be described.

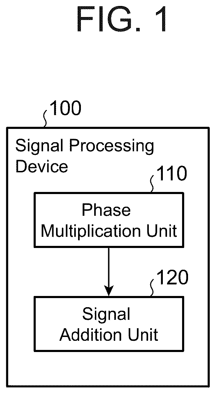

FIG. 1 is a diagram illustrating the basic configuration example of the signal processing device according to the present disclosure.

A signal processing device 100 performs computation processing related to time frequency analysis of signals, and outputs a computation result.

The computation result output from the signal processing device 100 is a value that enables estimation of temporal fluctuation of a frequency component of a signal.

The signal processing device 100 illustrated in FIG. 1 includes a phase multiplication unit 110 and a signal addition unit 120 (first signal addition unit).

The phase multiplication unit 110 performs a plurality of phase multiplications on a received signal.

The plurality of phase multiplications performed by the phase multiplication unit 110 are to perform complex multiplication on a signal $N \times K$ times (a first coefficient N and a second coefficient K) as described in, for example, embodiments to be described later.

The signal addition unit 120 (first signal addition unit) adds the signals obtained by the plurality of phase multiplications depending on a synthesis zone obtained by synthesizing a time zone related to time frequency analysis to be executed with respect to the signal.

The signal addition unit 120 acquires a time zone of each frequency related to time frequency analysis to be executed with respect to the signal, and adds the signals related to time zones per frequency among signals obtained by the plurality of phase multiplications.

The time zone of each frequency acquired by the signal addition unit 120 is stored in advance in, for example, an unillustrated storage unit.

Alternatively, the time zone of each frequency acquired by the signal addition unit 120 may be information determined on the basis of information received from the outside of the signal processing device 100. In this case, the signal processing device 100 is configured as in, for example, Embodiment 2 to be described later.

A hardware configuration for implementing the functions of the above components according to the present disclosure will be described later.

A processing example of the signal processing device will be described.

FIG. 2 is a flowchart illustrating an example of basic processing of the signal processing device 100 according to the present disclosure.

The processing illustrated in FIG. 2 is a signal processing method performed by the signal processing device according to the present disclosure.

According to the signal processing method, the phase multiplication unit 110 of the signal processing device 100 performs a plurality of phase multiplications on a received signal, and the signal addition unit 120 of the signal processing device 100 adds signals obtained by the phase multiplication unit 110 depending on a synthesis zone obtained by synthesizing a time zone related to the time frequency analysis to be executed with respect to the signal, thereby performing time frequency analysis on the signal.

When, for example, receiving a command from an unillustrated control unit or receiving a signal from the outside of the signal processing device 100, the device starts the processing illustrated in FIG. 2.

First, the signal processing device 100 executes phase multiplication processing (step ST10).

According to the phase multiplication processing, the phase multiplication unit 110 of the signal processing device 100 performs a plurality of phase multiplications on the received signal.

The phase multiplication unit 110 outputs the post-phase multiplication signal to the signal addition unit 120.

Next, the signal processing device 100 executes signal addition processing (first signal addition processing) (step ST20).

According to the signal addition processing, the signal addition unit 120 of the signal processing device 100 receives the post-phase multiplication signal.

Next, the signal addition unit 120 adds the signals obtained by the plurality of phase multiplications depending on a synthesis zone obtained by synthesizing time zones related to time frequency analysis to be executed with respect to the signal.

The signal addition unit 120 acquires a time zone of each frequency related to time frequency analysis to be executed with respect to the signal, and adds the signals related to time zones per frequency among signals obtained by the plurality of phase multiplications.

Next, the signal processing device 100 executes end determination processing (step ST30).

According to the end determination processing, the unillustrated control unit of the signal processing device 100 determines whether or not to end processing in accordance with a program stored in, for example, an unillustrated storage unit.

In a case where the unillustrated control unit has determined to not end the processing (step ST30 "NO"), the signal processing device 100 proceeds to processing in step ST10 and repeats the processing illustrated in FIG. 2.

In a case where the unillustrated control unit has determined to end the processing (step ST30 "YES"), the signal processing device 100 ends the processing illustrated in FIG. 2.

FIG. 3 is a diagram illustrating a concept of a processing result of the signal processing device 100 according to the present disclosure, and a concept of a processing result of a conventional technique.

FIG. 3 illustrates concepts of a time frequency sampling interval 1000 related to the present disclosure, a time frequency sampling interval 1010 related to general wavelet transform, a time frequency sampling interval 1020 related to a wavelet packet, and a time frequency sampling interval 1030 related to wavelet transform described in Patent Literature 1.

In a case of the time frequency sampling interval 1010 related to general wavelet transform, as for a frequency sampling interval, a frequency sampling interval of a high frequency component is wider and rougher than a frequency sampling interval of a low frequency component, and, as for a time sampling interval, a time sampling interval of the low frequency component is wider and rougher than a time sampling interval of the high frequency component.

While, in a case of the time frequency sampling interval 1020 related to the wavelet packet, as for a frequency sampling interval, a frequency sampling interval of a high frequency component is finer than a frequency sampling interval of the time frequency sampling interval 1010 related to general wavelet transform, and, as for a time sampling interval, a time sampling interval of a low frequency component is wider and rougher than a time sampling interval of the high frequency component similarly to those of the time frequency sampling interval 1010 related to general wavelet transform.

While, in a case of the time frequency sampling interval 1030 related to wavelet transform described in Patent Literature 1, as for a time sampling interval, a time sampling interval of a low frequency component is finer than that of the time frequency sampling interval 1010 related to general wavelet transform, and a frequency sampling interval is the same as the frequency sampling interval of the time frequency sampling interval 1010 related to general wavelet transform.

In a case of the time frequency sampling interval 1000 related to the present disclosure, the frequency sampling interval can be made finer than any one of the above sampling intervals 1010, 1020, and 1030, and the time sampling interval can be made finer than that of any one of the above sampling intervals 1010, 1020, and 1030.

As described above, according to the present disclosure, it is possible to change a time sampling interval together with a frequency sampling interval.

A configuration example of a signal processing device 100A including the signal processing device 100 will be described.

FIG. 4 is a diagram illustrating a configuration example of the signal processing device 100A according to Embodiment 1 of the present disclosure.

The signal processing device 100A illustrated in FIG. 4 includes a signal reception unit 130A, a phase multiplication unit 110A, a signal addition unit 120A (first signal addition unit), and an analysis result output unit 140A.

The signal reception unit 130A receives a signal input from the outside of the signal processing device 100A, and outputs the signal to the phase multiplication unit 110A.

The phase multiplication unit 110A receives the signal output from the signal reception unit 130A.

The phase multiplication unit 110A performs a plurality of phase multiplications on the received signal similarly to the already-described phase multiplication unit 110.

The signal addition unit 120A (first signal addition unit) adds the signals obtained by the plurality of phase multiplications depending on a synthesis zone obtained by synthesizing time zones related to time frequency analysis to be executed with respect to the signal similarly to the already-described signal addition unit 120.

More specifically, similarly to the already-described signal addition unit 120, for example, the signal addition unit 120A (first signal addition unit) acquires, for example, a time zone of each frequency related to the time frequency analysis to be executed with respect to the signal, and adds the signals related to the time zones per frequency among signals obtained by the plurality of phase multiplications. Consequently, it is possible to perform time frequency analysis matching a synthesis zone obtained by synthesizing different time zones per frequency.

The signal addition unit 120A outputs a post-signal addition processing signal to the analysis result output unit 140A.

The analysis result output unit 140A acquires a post-processing signal of the signal addition unit 120A, and outputs the signal as an analysis result.

The signal processing device 100A includes an unillustrated control unit, an unillustrated storage unit, and an unillustrated communication unit in addition to the above components.

The unillustrated control unit controls the overall signal processing device 100A and each component. The unillustrated control unit activates the signal processing device 100A according to, for example, a command from the outside. Furthermore, the unillustrated control unit controls a state (an operation state = a state such as activation, shut down, or sleep) of the signal processing device 100A.

The unillustrated storage unit stores each data used for the signal processing device 100A. For example, the unillustrated storage unit stores an output (output data) of each component in the signal processing device 100A, and outputs data requested by each component to a request source component.

The unillustrated communication unit communicates with an external device. For example, the signal processing device 100A and a peripheral device (not illustrated) communicate with each other. In a case where, for example, the signal processing device 100A and the peripheral device are not connected by wire, the unillustrated communication unit has a function of performing communication between the signal processing device 100A and the peripheral device. Furthermore, the unillustrated communication unit has a function of communicating with an external device (not illustrated).

The unillustrated control unit, the unillustrated storage unit, and the unillustrated communication unit are the same in the embodiments to be described later.

A hardware configuration for implementing the functions of the above components according to the present disclosure will be described later.

A processing example of the signal processing device will be described.

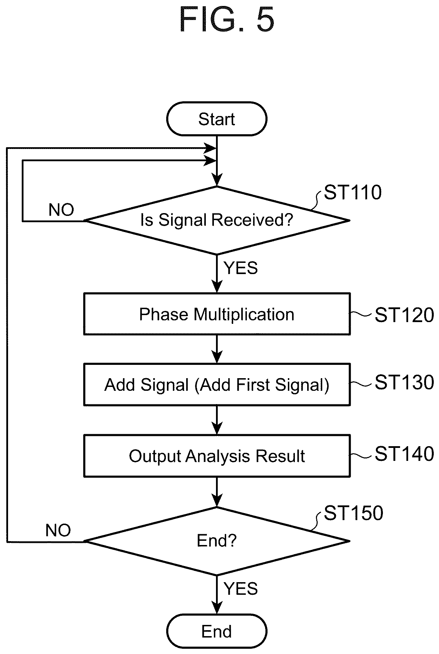

FIG. 5 is a flowchart illustrating an example of processing of the signal processing device 100A according to Embodiment 1 of the present disclosure.

When, for example, receiving a command from the unillustrated control unit or receiving a signal, the signal processing device 100A starts the processing illustrated in FIG. 5.

First, the signal processing device 100A executes signal reception determination processing (step ST110).

According to the signal reception determination processing, in a case where it has been determined that the signal has not been received (step ST110 "NO"), the signal reception unit 130A of the signal processing device 100A repeats the processing in ST110, and stands by until receiving the signal.

In a case where it has been determined that the signal reception unit 130A has received the signal (step ST110 "YES"), the signal processing device 100A next executes phase multiplication processing (step ST120).

According to the phase multiplication processing, the phase multiplication unit 110A of the signal processing device 100A performs a plurality of phase multiplications on the received signal similarly to the already-described phase multiplication processing.

The phase multiplication unit 110A outputs the post-phase multiplication signal to the signal addition unit 120A.

Next, the signal processing device 100A executes signal addition processing (first signal addition processing) (step ST130).

According to the signal addition processing, the signal addition unit 120A of the signal processing device 100A adds the signals obtained by the plurality of phase multiplications depending on a synthesis zone obtained by synthesizing a time zone related to time frequency analysis to be executed with respect to the signal similarly to the already-described signal addition processing.

The signal addition unit 120A outputs a post-signal addition processing signal to the analysis result output unit 140A.

Next, the signal processing device 100A executes analysis result output processing (step ST140).

According to the analysis result output processing, the analysis result output unit 140A of the signal processing device 100A outputs the post-signal addition processing signal as an analysis result to, for example, an unillustrated external device.

Next, the signal processing device 100A executes end determination processing (step ST150).

According to the end determination processing, the unillustrated control unit of the signal processing device 100A determines whether or not to end processing in accordance with a program stored in, for example, the unillustrated storage unit.

In a case where the unillustrated control unit has determined to not end the processing (step ST150 "NO"), the signal processing device 100A transitions to processing in step ST110 and repeats the processing illustrated in FIG. 5.

In a case where the unillustrated control unit has determined to end the processing (step ST150 "YES"), the signal processing device 100A ends the processing illustrated in FIG. 5.

As described above, the signal processing according to Embodiment 1 of the present disclosure can implement time frequency analysis (time-frequency analysis) by multiplying phases and adding signals.

Here, although there are problems that, when time sampling increases, as the time sampling increases, the number of times to use a wavelet base increases and, above all, a multiplier increases, the present disclosure can reduce a multiplier and reduce a computation amount by commonalizing necessary multiplication for a sum of products of each output as multiplication of phases in advance, devising an addition method, and expressing an output result of different positions of this time sampling.

As for time frequency analysis of signal processing according to the present disclosure, time frequency analysis can be performed with fine time sampling that has not been given by a wavelet packet, and with a low computation amount.

Furthermore, according to the time frequency analysis of the signal processing according to the present disclosure, since downsampling processing that is performed by a wavelet transform method described in Patent Literature 1 and sets the number of sampling points to a certain number is not performed, so that it is possible to perform time frequency analysis matching fine sampling in the frequency domain.

The signal processing device according to Embodiment 1 of the present disclosure can change a time sampling interval together with a frequency sampling interval at a time of time frequency analysis.

Furthermore, the signal processing device according to Embodiment 1 of the present disclosure can implement time frequency analysis at a fine sampling interval without excessively increasing the computation amount.

The signal processing device according to the present disclosure is configured as follows, for example.

A signal processing device that performs time frequency analysis on a signal includes:

a phase multiplication unit that performs a plurality of phase multiplications on a received signal; and
a signal addition unit that adds signals obtained by the plurality of phase multiplications depending on a synthesis zone obtained by synthesizing a time zone related to time frequency analysis to be executed with respect to the signal.

Consequently, the present disclosure provides an effect that it is possible to provide the signal processing device that can change a time sampling interval together with a frequency sampling interval at a time of time frequency analysis.

The signal processing method according to the present disclosure is configured as follows, for example.

The signal processing method performed by the signal processing device that performs time frequency analysis on a signal, includes:

by the phase multiplication unit of the signal processing device, performing the plurality of phase multiplications on a received signal; and
by the signal addition unit of the signal processing device, adding signals obtained by the phase multiplication unit depending on a synthesis zone obtained by synthesizing time zones related to the time frequency analysis to be executed with respect to the signal.

Consequently, the present disclosure provides an effect that it is possible to provide the signal processing method that can change a time sampling interval together with a frequency sampling interval at a time of time frequency analysis.

The signal processing device according to the present disclosure is further configured as follows, for example.

The signal addition unit

acquires a time zone of each frequency related to the time frequency analysis to be executed with respect to the signal, and
adds the signals related to the time zones per frequency among the signals obtained by the plurality of phase multiplications.

Consequently, the present disclosure further provides an effect that it is possible to provide a configuration that can perform time frequency analysis matching a synthesis zone obtained by synthesizing different time zones per frequency.

Furthermore, the present disclosure provides the same effect as the above effect by applying the above configuration to the above method.

Embodiment 2.

Embodiment 2 will describe an example of detailed processing of the signal processing device according to the present disclosure, and a configuration that can change a condition of the processing of the signal processing device.

In Embodiment 2, redundant descriptions of the same components, among the components according to Embodiment 2, as the already-described components according to Embodiment 1 are omitted as appropriate.

A configuration example of a signal processing device according to Embodiment 2 of the present disclosure will be described.

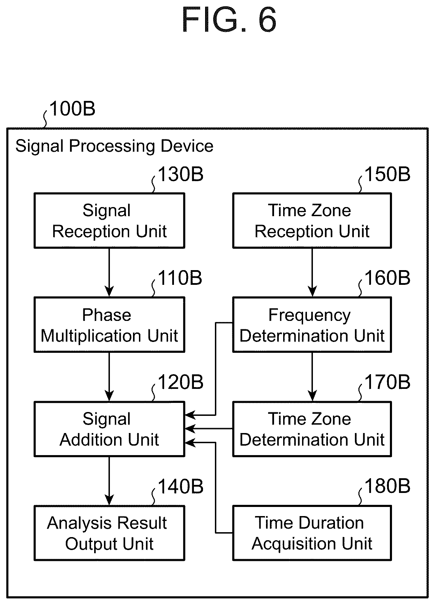

FIG. 6 is a diagram illustrating a configuration example of a signal processing device 100B according to Embodiment 2 of the present disclosure.

The signal processing device 100B illustrated in FIG. 6 includes a signal reception unit 130B, a phase multiplication unit 110B, a signal addition unit 120B (first signal addition unit), an analysis result output unit 140B, a time zone reception unit 150B, a frequency determination unit 160B, a time zone determination unit 170B, and a time duration acquisition unit 180B.

The time zone reception unit 150B receives time zone information indicating a time zone of each frequency related to time frequency analysis.

The time zone reception unit 150B receives and acquires, for example, a combination of the first coefficient related to the frequency and the second coefficient related to the time zone as the time zone information.

The first coefficient is a value that defines the frequency related to the time frequency analysis that the signal processing device 100B is caused to execute. The first coefficient is, for example, a value that indicates a frequency n to be described later, or a value (e.g., "N") that makes it possible to derive the frequency n.

The second coefficient is a value that defines the time zone related to the time frequency analysis that the signal processing device B is caused to execute. The second coefficient is, for example, a value that indicates a time zone k to be described later, or a value (e.g., "K") that makes it possible to derive the time zone k.

Note that the time zone reception unit 150B may be an internal component of the signal addition unit 120B.

The frequency determination unit 160B determines the frequency related to the time frequency analysis using the time zone information.

More specifically, for example, the frequency determination unit 160B acquires the first coefficient for defining the frequency, and determines the frequency n related to the time frequency analysis using the first coefficient.

Note that the frequency determination unit 160B may be an internal component of the signal addition unit 120B.

The time zone determination unit 170B determines the time zone related to the time frequency analysis using the time zone information.

More specifically, for example, the time zone determination unit 170B acquires the second coefficient for defining the time zone, and determines the time zone k related to the time frequency analysis using the second coefficient.

Note that the time zone determination unit 170B may be an internal component of the signal addition unit 120B.

The signal processing device 100B employs such a configuration, and consequently is configured to be able to change a time zone related to time frequency analysis depending on a frequency, adaptively change a desired time zone depending on an arbitrary frequency, and perform time frequency analysis.

The time duration acquisition unit 180B receives a condition of a time duration, and determines the time duration of the time zone on the basis of the condition.

The condition of the time duration is, for example, "p(n)" of a time duration 2p(n)+1 to be described later.

The signal processing device 100B employs this configuration, and consequently is configured to be able to change a time duration of a time zone.

Note that the time duration acquisition unit 180B may be an internal component of the signal addition unit 120B.

The signal reception unit 130B employs a configuration having the same function as that of the already-described signal reception unit 130A, and therefore description thereof will be omitted.

The phase multiplication unit 110B executes phase multiplication processing to be described later, and performs a plurality of phase multiplications on a received signal.

The signal addition unit 120B (first signal addition unit) executes the signal addition processing to be described later, and adds the signals obtained by the plurality of phase multiplications depending on a synthesis zone obtained by synthesizing time zones related to time frequency analysis to be executed with respect to the signal.

The signal addition unit 120B acquires a time zone of each frequency related to the time frequency analysis to be executed with respect to the signal using the first coefficient and the second coefficient, and adds the signals related to the time zones per frequency among signals obtained by the plurality of phase multiplications.

The signal addition unit 120B adds the signals related to the time zones per frequency further using the time duration determined by the time duration acquisition unit 180B.

The analysis result output unit 140B functions similarly to the already-described analysis result output unit 140A, acquires a post-processing signal of the signal addition unit 120B, and outputs the signal as an analysis result.

A hardware configuration for implementing the functions of the above components according to the present disclosure will be described later.

A processing example of an operation evaluation device according to Embodiment 2 of the present disclosure will be described.

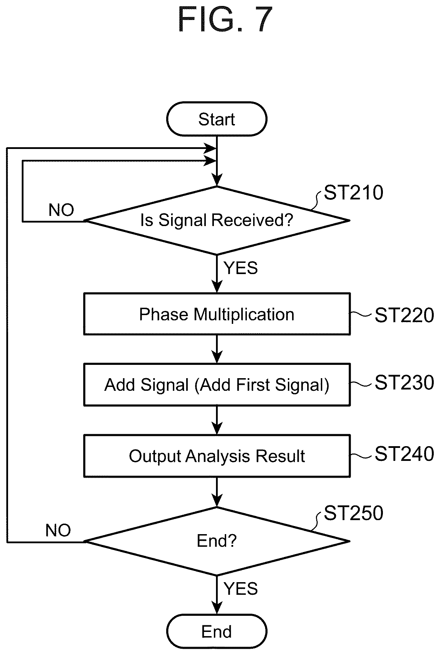

FIG. 7 is a flowchart illustrating an example of processing of the signal processing device 100B according to Embodiment 2 of the present disclosure.

In the description, the signal processing device 100B performs processing on a signal s(k) in a case where a signal time is k$\Delta$T (k = 1, ..., and K and $\Delta$T represents a sampling interval).

In the present embodiment, it is assumed that a low frequency component is designed to be at the center of the frequency, taking a negative frequency component into account.

Note that the low frequency component may be designed as the low frequency component as is without taking such a negative frequency into account.

When, for example, receiving a command from the unillustrated control unit or receiving a signal, the signal processing device 100B starts the processing illustrated in FIG. 7.

First, the signal processing device 100B executes signal reception determination processing (step ST210).

According to the signal reception determination processing, in a case where it has been determined that the signal has not been received (step ST210 "NO"), the signal reception unit 130B of the signal processing device 100B repeats the processing in step ST210 and stands by until receiving the signal.

In a case where it has been determined that the signal reception unit 130B has received the signal (step ST210 "YES"), the signal processing device 100B next executes phase multiplication processing (step ST220).

According to the phase multiplication processing, the phase multiplication unit 110B of the signal processing device 100B performs a plurality of phase multiplications on the received signal.

The phase multiplication unit 110B multiplies a phase on the signal s(k) in a case where the frequency is (n-1-N/2)/(KΔT) (n = 1, ..., N) as in the following equation (1).

$$S(n,k) = \exp\left(\frac{-j2\pi\left(n - 1 - \frac{N}{2}\right)\left(k - 1 - \frac{K}{2}\right)}{N}\right)s(k) \qquad (1)$$

A signal S(n, k) that is a computation result of the equation (1) can be obtained by performing complex multiplication N×K times.

The phase multiplication unit 110B outputs the signal S(n, k) to the signal addition unit 120B.

Next, the signal processing device 100B executes signal addition processing (first signal addition processing) (step ST230).

According to the signal addition processing, the signal addition unit 120B of the signal processing device 100B acquires the time zone k of each frequency n related to the time frequency analysis to be executed with respect to the signal, and adds signals related to the time zones k per frequency n among signals obtained by the plurality of phase multiplications.

It is possible to perform short-time Fourier transform on the signal S(n, k) by adding the signals of the desired time zones k of the arbitrary frequency n. In this regard, it is possible to implement wavelet transform by adaptively changing the time zones of the signals to be added depending on the frequency.

In this case, when a window function used for the wavelet base is rectangular, processing of performing addition with respect to complex multiplication previously performed N×K times is basically addition, and it is possible to perform wavelet transform without an excessive increase in a computation amount.

Even when time sampling becomes finer, it is possible to perform wavelet transform that does not increase complex multiplications.

Addition performed by the signal addition unit 120B to implement wavelet transform of a rectangular window in the present disclosure will be described.

To obtain zones for adding the signals S(n, k), p(n) is defined as in the following equation (2). Note that, although p(n) will be described quantitatively for the sake of the present embodiment, p(n) may be changed to another equation in accordance with an application method.

$$p(n) = \begin{cases} q(n) & r < q(n) \\ r & r \geq q(n) \end{cases} \qquad (2)$$

$$q(n) = \begin{cases} \mathrm{floor}\left(\frac{N}{\left(4\left(\frac{N}{2} - n\right)\right)} + 1\right) & \left(n < \frac{N}{2} - 1\right) \\ \frac{N}{2} - 1 & \left(n = \frac{N}{2} - 1, \frac{N}{2}, \frac{N}{2} + 1\right) \\ \mathrm{floor}\left(\frac{N}{\left(4\left(n - \frac{N}{2} - 1\right)\right)} + 1\right) & \left(n > \frac{N}{2} + 1\right) \end{cases} \qquad (3)$$

"r" in the equation (2) is a lower limit value of a time window duration for obtaining a certain frequency resolution, and "floor( )" in the equation (3) is a floor function.

The wavelet transform of the rectangular window according to the present disclosure adds a duration 2p(n)+1 at around the time k per frequency n.

Consequently, it is possible to perform wavelet transform having a base of the rectangular window of the frequency n, the time k, and the time duration 2p(n)+1.

Hence, a post-processing time frequency component (the "time frequency component" is also referred to as a "time-frequency component") Fr(n, k) is obtained as in the following equation (4) and equation (5).

$$F_r(n,k) = \alpha \sum_{1 \leq l \leq 2p(n)+1} S(n, k + l - p(n) - 1) \qquad (4)$$

$$\alpha = \frac{1}{(2p(n) + 1)} \qquad (5)$$

Although a gain is adjusted depending on the number of times of addition using "α" in the above equations, essential computation related to wavelet transform is performed only by addition.

Note that the gain obtained using "$\alpha$" is given assuming that the wavelet base and a time duration of a component that needs to be extracted match.

Wavelet transform can be performed in an arbitrary time zone, so that it is possible to perform frequency analysis without increasing a multiplier.

Hereinafter, processing of receiving time zone information will be described.

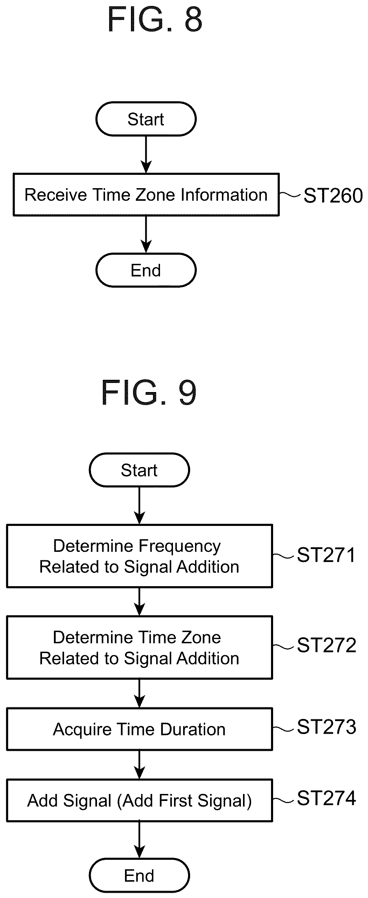

FIG. 8 is a flowchart illustrating an example of processing of a time zone information reception unit B in the signal processing device 100B according to Embodiment 2 of the present disclosure.

When, for example, receiving an operation for setting a time zone, the signal processing device 100B displays an operation screen on an unillustrated display unit or display device, and starts processing illustrated in FIG. 8.

The signal processing device 100B executes time zone information reception processing (step ST260).

The time zone information reception unit B receives time zone information from, for example, a user via a terminal.

The time zone information is information indicating a time zone of each frequency, and includes, for example, a combination of a frequency and a time zone.

When receiving the time zone information, the signal processing device 100B stores the time zone information in the unillustrated storage unit, and ends the processing illustrated in FIG. 8.

Furthermore, when receiving the time zone information, the time zone information reception unit B sends the time zone information to the time zone determination unit 170B and the frequency determination unit 160B.

Here, processing related to the signal addition processing according to Embodiment 2 will be described.

FIG. 9 is a flowchart illustrating a detailed example of the signal addition processing in the signal processing device 100B according to Embodiment 2 of the present disclosure.

When, for example, starting the signal addition processing illustrated in FIG. 8, the signal processing device 100B starts the processing illustrated in FIG. 9.

The signal processing device 100B acquires a value used for the signal addition processing.

When the signal processing device 100B starts the processing, the time zone reception unit 150B of the signal processing device 100B receives a time zone of each frequency.

More specifically, the time zone reception unit 150B receives, for example, a combination of the first coefficient and the second coefficient.

Furthermore, the time zone reception unit 150B may acquire the first coefficient and the second coefficient included in the time zone information stored in advance in the unillustrated storage unit.

In a case where the time zone reception unit 150B is the internal component of the signal addition unit 120B, the processing is executed in the signal addition unit 120B.

Next, the signal processing device 100B determines a frequency related to signal addition (step ST271).

More specifically, the frequency determination unit 160B of the signal processing device 100B determines the frequency related to the time frequency analysis using the time zone information. Still more specifically, for example, the frequency determination unit 160B acquires the first coefficient for defining the frequency, and determines the frequency n related to the time frequency analysis using the first coefficient.

The frequency determination unit 160B outputs the determined frequency to the signal addition unit 120B.

In a case where the frequency determination unit 160B is the internal component of the signal addition unit 120B, the processing is executed in the signal addition unit 120B.

Next, the signal processing device 100B determines a time zone related to signal addition (step ST272).

More specifically, the time zone determination unit 170B of the signal processing device 100B determines the time zone related to the time frequency analysis using the time zone information. Still more specifically, for example, the time zone determination unit 170B acquires the second coefficient for defining the time zone, and determines the time zone k related to the time frequency analysis using the second coefficient.

The time zone determination unit 170B outputs the determined time zone to the signal addition unit 120B.

In a case where the time zone determination unit 170B is the internal component of the signal addition unit 120B, the processing is executed in the signal addition unit 120B.

Next, the signal processing device 100B executes time duration acquisition processing (step ST273).

More specifically, the time duration acquisition unit 180B of the signal processing device 100B receives a condition of a time duration, and determines and acquires the time duration of the time zone on the basis of the condition.

The time duration acquisition unit 180B outputs the time duration to the signal addition unit 120B.

In a case where the time duration acquisition unit 180B is the internal component of the signal addition unit 120B, the processing is executed in the signal addition unit 120B.

Next, the signal processing device 100B executes signal addition processing (first signal addition processing) (step ST274).

According to the signal addition processing, the signal addition unit 120B of the signal processing device 100B executes the above-described signal addition processing by acquiring and using the frequency related to the time frequency analysis, the time zone related to the time frequency analysis, and the time duration related to the time frequency analysis.

The signal addition processing (first signal addition processing) corresponds to already-described signal addition processing (step ST240).

When executing the signal addition processing (first signal addition processing), the signal processing device 100B ends the processing illustrated in FIG. 9.

The description returns to explanation of FIG. 7.

When the signal processing device 100B executes the signal addition processing, the signal processing device 100B next executes analysis result output processing (step ST240).

According to the analysis result output processing, the analysis result output unit 140B of the signal processing device 100B acquires a post-processing signal of the signal addition unit 120B, and outputs the signal as an analysis result.

Next, the signal processing device 100B executes end determination processing (step ST250).

According to the end determination processing, the unillustrated control unit of the signal processing device 100B determines whether or not to end processing in accordance with a program stored in, for example, the unillustrated storage unit.

In a case where the unillustrated control unit has determined to not end the processing (step ST250 "NO"), the signal processing device 100B transitions to processing in step ST210 and repeats the processing illustrated in FIG. 7.

In a case where the unillustrated control unit has determined to end the processing (step ST250 "YES"), the signal processing device 100B ends the processing illustrated in FIG. 7.

As for time frequency analysis of signal processing according to Embodiment 2 of the present disclosure, time frequency analysis can be performed with fine time sampling that has not been given by a wavelet packet, and with a low computation amount.

Furthermore, according to the time frequency analysis of the signal processing according to Embodiment 2 of the present disclosure, since downsampling processing that is performed by the wavelet transform method described in Patent Literature 1 and sets the number of sampling points to a certain number is not performed, so that it is possible to perform time frequency analysis matching fine sampling in the frequency domain.

Furthermore, the configuration according to Embodiment 2 of the present disclosure can change a time zone depending on a frequency, and makes it possible to adaptively change a desired time zone depending on an arbitrary frequency, and perform time frequency analysis.

Furthermore, the configuration according to Embodiment 2 of the present disclosure makes it possible to change a time duration of a time zone.

The signal processing device according to the present disclosure is configured as follows, for example.

The signal processing device further includes: a frequency determination unit that acquires the first coefficient for defining a frequency, and determines the frequency related to the time frequency analysis using the first coefficient; and

a time zone determination unit that acquires the second coefficient for defining a time zone, and determines the time zone related to the time frequency analysis using the second coefficient, and
the signal addition unit
uses the frequency determined by the frequency determination unit and the time zone determined by the time zone determination unit,
acquires a time zone of each frequency related to the time frequency analysis to be executed with respect to the signal, and
adds the signals related to the time zones per frequency among the signals obtained by the plurality of phase multiplications.

Consequently, the present disclosure provides an effect that it is possible to provide the configuration that can change a time zone depending on a frequency and can adaptively change a desired time zone depending on an arbitrary frequency, and perform time frequency analysis.

Furthermore, the present disclosure provides the same effect as the above effect by applying the above configuration to the above method.

The signal processing device according to the present disclosure is configured as follows, for example.

The signal processing device further includes a time duration acquisition unit that receives a condition of a time duration, and determines the time duration of the time zone on the basis of the condition,

the signal addition unit
adds the signals related to the time zones per frequency further using the time duration determined by the time duration acquisition unit.

Consequently, the present disclosure provides an effect that it is possible to provide a configuration that can change a time duration of a time zone.

Furthermore, the present disclosure provides the same effect as the above effect by applying the above configuration to the above method.

Embodiment 3.

Embodiment 3 will describe an aspect where it is possible to perform the same time frequency analysis as that in a case where a window function such as a triangular window other than the rectangular window is used for the wavelet base.

Embodiment 3 will omit redundant description of the same components among the components according to Embodiment 3 as the already-described components according to Embodiment 1 or Embodiment 2.

A configuration example of a signal processing device according to Embodiment 3 of the present disclosure will be described.

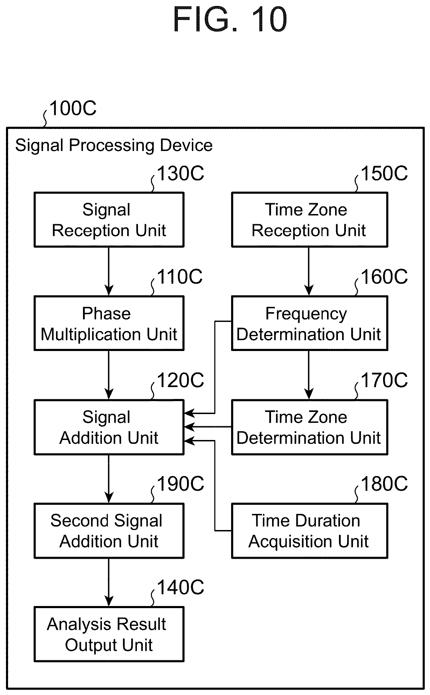

FIG. 10 is a diagram illustrating a configuration example of a signal processing device 100C according to Embodiment 3 of the present disclosure.

The signal processing device 100C illustrated in FIG. 10 is configured to obtain the same effect as that obtained by using, for example, the triangular window for the wavelet base using the signal $S(n, k)$ that is an intermediate output of the signal processing device 100B as described in Embodiment 2.

The signal processing device 100C includes a signal reception unit 130C, a phase multiplication unit 110C, a signal addition unit 120C (first signal addition unit), an analysis result output unit 140C, a time zone reception unit 150C, a frequency determination unit 160C, a time zone determination unit 170C, a time duration acquisition unit 180C, and a second signal addition unit 190C.

The signal reception unit 130C, the phase multiplication unit 110C, and the analysis result output unit 140C are configured similarly to the already-described signal reception units 130A and 130B, phase multiplication units 110A and 110B, and analysis result output units 140A and 140B, respectively, and detailed description thereof will be omitted.

The time zone reception unit 150C, the frequency determination unit 160C, the time zone determination unit 170C, and the time duration acquisition unit 180C are configured similarly to the already-described time zone reception unit 150B, frequency determination unit 160B, time zone determination unit 170B, and time duration acquisition unit 180B, respectively, and detailed description thereof will be omitted.

The signal addition unit 120C (first signal addition unit) has the same function as those of the already-described signal addition units 120A and 120B.

The signal addition unit 120C (first signal addition unit) outputs a post-signal addition processing signal to the second signal addition unit 190C.

The second signal addition unit 190C further uses and adds the signals output from a signal addition unit C to the signal output from the signal addition unit C.

The signal processing device 100C employs this configuration, and employs the same configuration as that in a case where the window function such as the triangular window other than the rectangular window is used for the wavelet base.

Alternatively, the second signal addition unit 190C performs bit shift on part of the signal output from the signal addition unit 120C to add to the signal output from the second signal addition unit 120C.

The signal processing device 100C employs this configuration, and provides an effect that it is possible to provide the same configuration as that in the case where the window function such as the triangular window other than the rectangular window is used for the wavelet base.

The analysis result output unit 140C are the same as the already-described analysis result output units 140A and 140B, and description thereof will be omitted.

A hardware configuration for implementing the functions of the above components according to the present disclosure will be described later.

A processing example of an operation evaluation device according to Embodiment 3 of the present disclosure will be described.

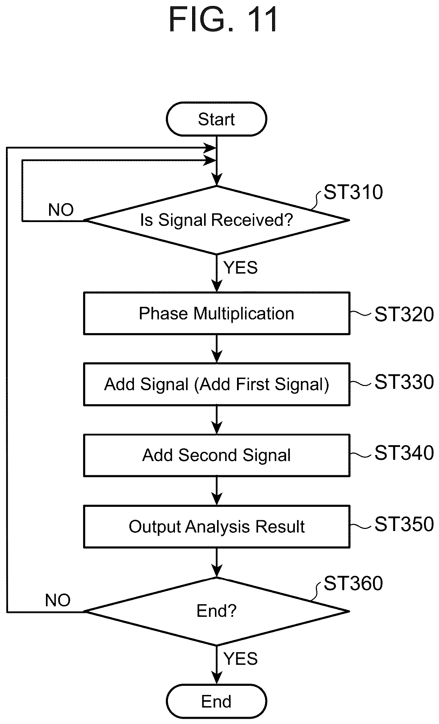

FIG. 11 is a flowchart illustrating an example of processing of the signal processing device 100C according to Embodiment 3 of the present disclosure.

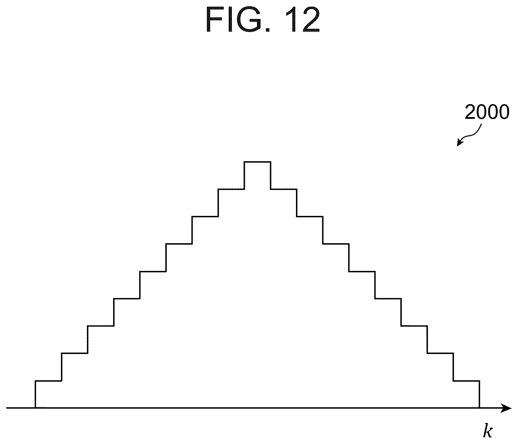

FIG. 12 is a schematic diagram illustrating a concept of processing that can be implemented by the signal processing device 100C according to Embodiment 3 of the present disclosure.

When, for example, receiving a command from the unillustrated control unit or receiving a signal, the signal processing device 100C starts the processing illustrated in FIG. 11.

First, the signal processing device 100C executes signal reception determination processing (step ST310).

According to the signal reception determination processing, in a case where it has been determined that the signal has not been received (step ST310 "NO"), the signal reception unit 130C of the signal processing device 100C repeats the processing in step ST310 and stands by until receiving the signal similarly to the already-described signal reception processing.

In a case where it has been determined that the signal reception unit 130C has received the signal (step ST310 "YES"), the signal processing device 100C next executes phase multiplication processing (step ST320).

According to the phase multiplication processing, the phase multiplication unit 110C of the signal processing device 100C performs a plurality of phase multiplications on the received signal similarly to the already-described phase multiplication processing.

Next, the signal processing device 100C executes signal addition processing (first signal addition processing) (step ST330).

According to the signal addition processing, the signal addition unit 120C of the signal processing device 100C acquires the time zone k of each frequency n related to the time frequency analysis to be executed with respect to the signal, and adds signals related to the time zones k per frequency n among signals obtained by the plurality of phase multiplications similarly to the already-described signal addition processing (first signal addition processing).

When executing the first signal addition processing, the signal addition unit 120C (first signal addition unit) of the signal processing device 100C outputs a post-first signal addition processing signal S(n, k) to the second signal addition unit 190C.

Next, the signal processing device 100C executes second signal addition processing (step ST340).

According to the second signal addition processing, the second signal addition unit 190C of the signal processing device 100C further uses and adds the signals output from the signal addition unit 120C to the signal output from the signal addition unit 120C.

The second signal addition unit 190C obtains a processing result Ft(n, k) on the basis of the following equation (6) and equation (7).

$$F_t(n,k) = \beta \left( (p(n)+1)S(n,k) + \sum_{1 \le l \le p(n)} l \begin{pmatrix} S(n, k+l-p(n)-1) + \\ S(n, k-l+p(n)+1) \end{pmatrix} \right) \qquad (6)$$

$$\beta = {}^1\!/_{(p(n)+1)^2} \qquad\qquad (7)$$

The equation (6) and the equation (7) implement the triangular window by multiplying S(n, k+-(1-p(n))-l) with "1" to add.

However, this multiplication can be substituted with addition of an equal gain to a signal obtained by changing a signal zone.

This principle will be described with reference to FIG. 12.

FIG. 12 illustrates a schematic diagram of a weight 2000 in a case where a signal obtained by changing a signal zone is added with an equal gain.

This diagram shows that a signal that is obtained by the processing performed by the units up to the second signal addition unit 190C and is obtained by adding the equal gain to the signal obtained by changing the signal zone is equivalent to the triangular window.

This indicates that the triangular window can be used without performing multiplication.

A deriving result of a narrow time duration can be also derived in a process of deriving a calculation result of a wide time duration, so that it is also possible to employ a configuration that does not excessively increase the number of times of addition.

The second signal addition unit 190C outputs the processing result Ft(n, k) calculated on the basis of such an idea as a time frequency analysis result to the analysis result output unit 140C.

Note that the second signal addition unit 190C may perform processing in such a way that, by bit shift, a signal is equivalent to a window obtained by changing a gain from the triangular window without excessively increasing the computation amount, and an effect equal to the above effect can be obtained.

When the signal processing device 100C executes the second signal addition processing, the signal processing device 100C next executes analysis result output processing (step ST350).

According to the analysis result output processing, the analysis result output unit 140C of the signal processing device 100C executes the same processing as the already-described analysis result output processing.

Next, the signal processing device 100C executes end determination processing (step ST360).

According to the end determination processing, the unillustrated control unit of the signal processing device 100C determines whether or not to end processing in accordance with a program stored in, for example, the unillustrated storage unit.

In a case where the unillustrated control unit has determined to not end the processing (step ST360 "NO"), the signal processing device 100C transitions to processing in step ST310 and repeats the processing illustrated in FIG. 11.

In a case where the unillustrated control unit has determined to end the processing (step ST360 "YES"), the signal processing device 100C ends the processing illustrated in FIG. 11.

According to the embodiments of the present disclosure, it is possible to make sampling intervals in the both domains fine.

Furthermore, the embodiments of the present disclosure employ the configuration that can utilize the triangular window.

That is, the embodiments of the present disclosure can provide the same configuration as that in a case where the window function such as the triangular window other than the rectangular window is used for the wavelet base.

According to the embodiments of the present disclosure, it is possible to obtain a side lobe reduction effect using the triangular window without excessively a computation amount.

The embodiments of the present disclosure implement wavelet transform of fine time frequency sampling equivalent to that performed using the triangular window for the wavelet base by adding addition.

While Patent Literatures implement wavelet transform of fine time sampling, yet has a problem that that a base is a rectangular window and accuracy is low, the embodiments of the present disclosure describe a proposal for solution of such a problem.

The signal processing device according to the present disclosure is further configured as follows, for example.

The signal processing device includes the second signal addition unit that further uses and adds the signals output from the signal addition unit to the signal output from the signal addition unit.

Consequently, the present disclosure provides an effect that it is possible to provide the same configuration as that in the case where the window function such as the triangular window other than the rectangular window is used for the wavelet base.

Furthermore, the present disclosure provides the same effect as the above effect by applying the above configuration to the above method.

The signal processing device according to the present disclosure is further configured as follows, for example.

The signal processing device includes the second signal addition unit that performs bit shift on part of the signal output from the signal addition unit to add to the signal output from the signal addition unit.

Consequently, the present disclosure provides an effect that it is possible to provide the same configuration as that in the case where the window function such as the triangular window other than the rectangular window is used for the wavelet base.

Furthermore, the present disclosure provides the same effect as the above effect by applying the above configuration to the above method.

Here, a hardware configuration for implementing the functions according to the present disclosure will be described.

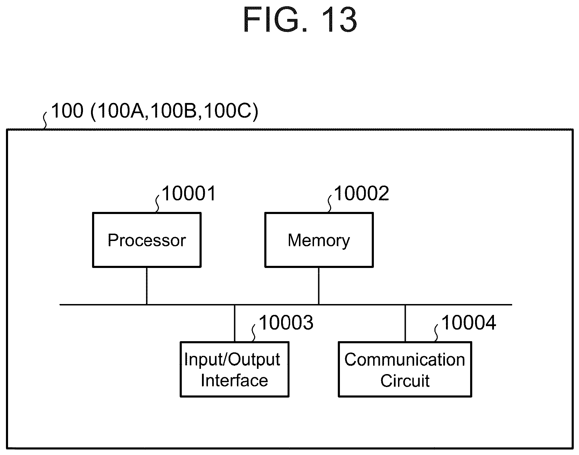

FIG. 13 is a diagram illustrating a first example of the hardware configuration for implementing the functions of the configuration according to the present disclosure.

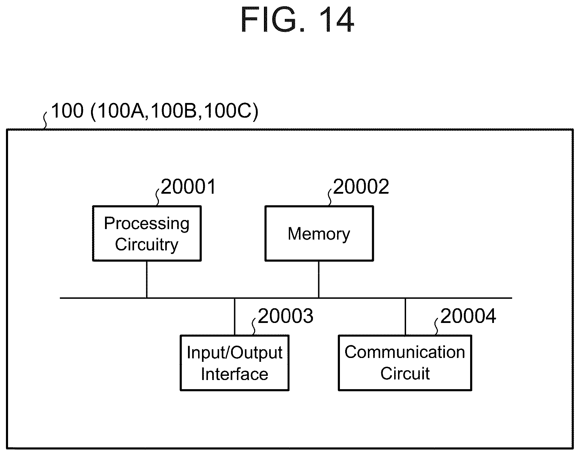

FIG. 14 is a diagram illustrating a second example of the hardware configuration for implementing the functions of the configuration according to the present disclosure.

The signal processing devices 100, 100A, 100B, and 100C according to the present disclosure are each implemented as hardware illustrated in FIG. 13 or 14.

The operation evaluation devices 100, 100A, 100B, 100C, 100D, 100E, 100E', and 100E" each include, for example, a processor 10001, a memory 10002, an input/output interface 10003, and a communication circuit 10004 as illustrated in FIG. 13.

The processor 10001 and the memory 10002 are mounted on, for example, a computer.

The memory 10002 has a program stored thereon for causing the computer to function as the phase multiplication units 110, 110A, 110B, and 110C, the signal addition units 120, 120A, 120B, and 120C, the signal reception units (first signal addition units) 130A, 130B, and 130C, the analysis result output units 140A, 140B, and 140C, the time zone reception units 150B and 150C, the frequency determination units 160B and 160C, the time zone determination units 170B and 170C, the time duration acquisition units 180B and 180C, the second signal addition unit 190C, and the unillustrated control unit. The processor 1001 reads and executes the program stored in the memory 10002 to implement the functions of the phase multiplication units 110, 110A, 110B, and 110C, the signal addition units 120, 120A, 120B, and 120C, the signal reception units (first signal addition units) 130A, 130B, and 130C, the analysis result output units 140A, 140B, and 140C, the time zone reception units 150B and 150C, the frequency determination units 160B and 160C, the time zone determination units 170B and 170C, the time duration acquisition units 180B and 180C, the second signal addition unit 190C, and the unillustrated control unit.

Furthermore, the memory 10002 or the unillustrated another memory implement the unillustrated storage unit.

Furthermore, the communication circuit 10004 implements the unillustrated communication unit.

For the processor 10001, for example, a Central Processing Unit (CPU), a Graphics Processing Unit (GPU), a microprocessor, a microcontroller, a Digital Signal Processor (DSP), or the like is used.

The memory 10002 may be a non-volatile or volatile semiconductor memory such as a Random Access Memory (RAM), a Read Only Memory (ROM), an Erasable Programmable Read Only Memory (EPROM), an Electrically Erasable Programmable Read Only Memory (EEPROM), or a flash memory, may be a magnetic disk such as a hard disk or a flexible disk, an optical disk such as a Compact Disc (CD) or a Digital Versatile Disc (DVD), or an magneto-optical disk.

The processor 10001 and the memory 10002 or the communication circuit 10004 are connected in a state where data can be sent therebetween. Furthermore, the processor 10001 and the memory 10002 or the communication circuit 10004 are connected in a state where data can be sent between the processor 10001 and the memory 10002 or the communication circuit 10004 and another hardware via the input/output interface 10003.

Alternatively, functions of the phase multiplication units 110, 110A, 110B, and 110C, the signal addition units 120, 120A, 120B, and 120C, the signal reception units (first signal addition units) 130A, 130B, and 130C, the analysis result output units 140A, 140B, and 140C, the time zone reception units 150B and 150C, the frequency determination units 160B and 160C, the time zone determination units 170B and 170C, the time duration acquisition units 180B and 180C, the second signal addition unit 190C, and the unillustrated control unit in the signal processing devices 100, 100A, 100B, and 100C may be implemented by a dedicated processing circuit 20001 as illustrated in FIG. 14.

For the processing circuit 200001, for example, a single circuit, a composite circuit, a programmed processor, a parallel-programmed processor, an Application Specific Integrated Circuit (ASIC), a Programmable Logic Device (PLD), a Field-Programmable Gate Array (FPGA), a System-on-a-Chip (SoC), a system Large-Scale Integration (LSI), or the like is used.

Furthermore, a memory 20002 or the unillustrated another memory implement the unillustrated storage unit.

The memory 20002 may be a non-volatile or volatile semiconductor memory such as a Random Access Memory (RAM), a Read Only Memory (ROM), an Erasable Programmable Read Only Memory (EPROM), an Electrically Erasable Programmable Read-Only Memory (EEPROM), or a flash memory, may be a magnetic disk such as a hard disk or a flexible disk, an optical disk such as a Compact Disc (CD) or a Digital Versatile Disc (DVD), or an magneto-optical disk.

Furthermore, a communication circuit 20004 implements the unillustrated communication unit.

The processing circuit 20001 and the memory 20002 or the communication circuit 20004 are connected in a state where data can be sent therebetween. Furthermore, the processing circuit 20001 and the memory 20002 or the communication circuit 20004 are connected in a state where data can be sent between the processing circuit 20001 and the memory 20002 or the communication circuit 20004 and another hardware via an input/output interface 20003.

Note that the functions of the phase multiplication units 110, 110A, 110B, and 110C, the signal addition units 120, 120A, 120B, and 120C, the signal reception units (first signal addition units) 130A, 130B, and 130C, the analysis result output units 140A, 140B, and 140C, the time zone reception units 150B and 150C, the frequency determination units 160B and 160C, the time zone determination units 170B and 170C, the time duration acquisition units 180B and 180C, the second signal addition unit 190C, and the unillustrated control unit in the signal processing devices 100, 100A, 100B, and 100C may be implemented as respectively different processing circuits or may be collectively implemented as a processing circuit.

Alternatively, part of the functions of the phase multiplication units 110, 110A, 110B, and 110C, the signal addition units 120, 120A, 120B, and 120C, the signal reception units (first signal addition units) 130A, 130B, and 130C, the analysis result output units 140A, 140B, and 140C, the time zone reception units 150B and 150C, the frequency determination units 160B and 160C, the time zone determination units 170B and 170C, the time duration acquisition units 180B and 180C, the second signal addition unit 190C, and the unillustrated control unit in the signal processing devices 100, 100A, 100B, and 100C may be implemented by the processor 10001 and the memory 10002, and the rest of functions may be implemented by the processing circuit 20001.

Note that the present disclosure allows free combinations of the embodiments, modification of arbitrary components in the embodiments, or omission of arbitrary components in the embodiments within the scope of the present disclosure.

INDUSTRIAL APPLICABILITY

The signal processing device according to the present disclosure can implement the configuration that can change a time sampling interval together with a frequency sampling interval at a time of time frequency analysis, and consequently is suitable for use for time frequency analysis.

REFERENCE SIGNS LIST

100, 100A, 100B, 100C: Signal processing device, 110, 110A, 110B, 110C: Phase multiplication unit, 120, 120A, 120B, 120C: Signal addition unit (First signal addition unit), 130A, 130B, 130C: Signal reception unit, 140A, 140B, 140C: Analysis result output unit, 150B, 150C: time zone reception unit, 160B, 160C: Frequency determination unit, 170B, 170C:

Time zone determination unit, 180B, 180C: Time duration acquisition unit, 190C: Second signal addition unit, 1000: Time frequency sampling interval related to present disclosure, 1010: Time frequency sampling interval related to general wavelet transform, 1020: Time frequency sampling interval related to wavelet packet, 1030: Time frequency sampling interval related to wavelet transform described in Patent Literature 1, 2000: Weight in case where signal obtained by changing signal zone is added with equal gain, 10001: Processor, 10002: Memory, 10003: Input/output interface, 10004: Communication circuit, 20001: Processing circuit, 20002: Memory, 20003: Input/output interface, 20004: Communication circuit

**Claims**

1. A signal processing device that performs time frequency analysis on a signal comprising:

   a phase multiplication unit to perform a plurality of phase multiplications on a received signal; and
   a signal addition unit to add signals obtained by the plurality of phase multiplications depending on a synthesis zone obtained by synthesizing a time zone related to the time frequency analysis to be executed with respect to the signal.

2. The signal processing device according to claim 1, wherein the signal addition unit

   acquires a time zone of each frequency related to the time frequency analysis to be executed with respect to the signal, and
   adds the signals related to the time zones per frequency among the signals obtained by the plurality of phase multiplications.

3. The signal processing device according to claim 1, further comprising:

   a frequency determination unit to acquire a first coefficient for defining a frequency,
   and determine the frequency related to the time frequency analysis using the first coefficient; and

   a time zone determination unit to acquire a second coefficient for defining a time zone, and determine the time zone related to the time frequency analysis using the second coefficient,
   wherein the signal addition unit
   uses the frequency determined by the frequency determination unit and the time zone determined by the time zone determination unit,
   acquires a time zone of each frequency related to the time frequency analysis to be executed with respect to the signal, and
   adds the signals related to the time zones per frequency among the signals obtained by the plurality of phase multiplications.

4. The signal processing device according to claim 3, further comprising a time duration acquisition unit to receive a condition of a time duration, and determine the time duration of the time zone on a basis of the condition, wherein the signal addition unit adds the signals related to the time zones per frequency further using the time duration determined by the time duration acquisition unit.

5. The signal processing device according to any one of claims 1 to 4, further comprising a second signal addition unit to further use and add the signal output from the signal addition unit to the signal output from the signal addition unit.

6. The signal processing device according to any one of claims 1 to 4, further comprising a second signal addition unit to perform bit shift on part of the signal output from the signal addition unit to add to the signal output from the signal addition unit.

7. A signal processing method performed by a signal processing device comprising:

   by a phase multiplication unit of the signal processing device, performing a plurality of phase multiplications on a received signal; and
   by a signal addition unit of the signal processing device, adding signals obtained by the phase multiplication unit depending on a synthesis zone obtained by synthesizing a time zone related to the time frequency analysis to be executed with respect to the signal.

# FIG. 1

100

Signal Processing Device

110

Phase Multiplication Unit

120

Signal Addition Unit

# FIG. 2

```
                        ┌──────────┐
                        │  Start   │
                        └────┬─────┘
      ┌──────────────────────▼──────────────┐
      │          ┌───────────────────────┐
      │          │  Phase Multiplication │ ∼ST10
      │          └───────────┬───────────┘
      │                      ▼
      │          ┌───────────────────────┐
      │          │ Add Signal (Add First │ ∼ST20
      │          │       Signal)         │
      │          └───────────┬───────────┘
      │                      ▼
      │  NO              ╱───────╲   ⌒ST30
      └─────────────────< End?    >
                         ╲───────╱
                             │ YES
                             ▼
                        ┌──────────┐
                        │   End    │
                        └──────────┘
```

FIG. 3

# FIG. 4

100A

Signal Processing Device

130A

Signal Reception Unit

110A

Phase Multiplication Unit

120A

Signal Addition Unit

140A

Analysis Result Output Unit

# FIG. 5

```
                    ┌──────────┐
                    │  Start   │
                    └──────────┘
                         │
   ┌─────────────────────┼──┐
   │  ┌──────────────────┤  │
   │  │                  ▼  ▼
   │  │         ◇─────────────────◇  ╭ST110
   │  │   NO   Is Signal Received?
   │  │        ◇─────────────────◇
   │  │                  │ YES
   │  │                  ▼
   │  │         ┌─────────────────┐
   │  │         │ Phase Multiplication │  ST120
   │  │         └─────────────────┘
   │  │                  │
   │  │                  ▼
   │  │         ┌─────────────────────────┐
   │  │         │ Add Signal (Add First Signal) │  ST130
   │  │         └─────────────────────────┘
   │  │                  │
   │  │                  ▼
   │  │         ┌─────────────────────┐
   │  │         │ Output Analysis Result │  ST140
   │  │         └─────────────────────┘
   │  │                  │
   │  │                  ▼
   │  │         ◇─────────────────◇  ╭ST150
   │  └──  NO        End?
   │            ◇─────────────────◇
   │                     │ YES
   │                     ▼
   │              ┌──────────┐
   │              │   End    │
   │              └──────────┘
```

# FIG. 6

100B

Signal Processing Device

| 130B | 150B |
|---|---|
| Signal Reception Unit | Time Zone Reception Unit |

| 110B | 160B |
|---|---|
| Phase Multiplication Unit | Frequency Determination Unit |

| 120B | 170B |
|---|---|
| Signal Addition Unit | Time Zone Determination Unit |

| 140B | 180B |
|---|---|
| Analysis Result Output Unit | Time Duration Acquisition Unit |

# FIG. 7

```
                    ┌──────────┐
                    │  Start   │
                    └────┬─────┘
         ┌──────┐        │
         │      └───────►│
         │  ┌────────────►│
         │  │             ▼
         │  │         ╱───────────────────╲  ⌐ST210
         │  │  NO    ╱   Is Signal Received? ╲
         │  │◄──────╲                       ╱
         │  │         ╲───────────────────╱
         │  │             │ YES
         │  │             ▼
         │  │    ┌──────────────────────┐
         │  │    │ Phase Multiplication │  ~ST220
         │  │    └──────────┬───────────┘
         │  │               ▼
         │  │    ┌──────────────────────────┐
         │  │    │ Add Signal (Add First Signal) │  ~ST230
         │  │    └──────────┬───────────┘
         │  │               ▼
         │  │    ┌──────────────────────┐
         │  │    │ Output Analysis Result │  ~ST240
         │  │    └──────────┬───────────┘
         │  │               ▼
         │  │         ╱───────────╲  ⌐ST250
         │  │  NO    ╱    End?      ╲
         │  └──────◄╲              ╱
         │           ╲───────────╱
         │               │ YES
         │               ▼
         │         ┌──────────┐
         │         │   End    │
         │         └──────────┘
```

# FIG. 8

```
            ( Start )
                |
                v
+--------------------------------+
| Receive Time Zone Information  |--- ST260
+--------------------------------+
                |
                v
             ( End )
```

# FIG. 9

```
              ( Start )
                  |
                  v
+--------------------------------+
|     Determine Frequency        |
|   Related to Signal Addition   |--- ST271
+--------------------------------+
                  |
                  v
+--------------------------------+
|     Determine Time Zone        |
|   Related to Signal Addition   |--- ST272
+--------------------------------+
                  |
                  v
+--------------------------------+
|     Acquire Time Duration      |--- ST273
+--------------------------------+
                  |
                  v
+--------------------------------+
|  Add Signal (Add First Signal) |--- ST274
+--------------------------------+
                  |
                  v
              ( End )
```

# FIG. 10

**100C**

Signal Processing Device

| | |
|---|---|
| **130C** Signal Reception Unit | **150C** Time Zone Reception Unit |
| **110C** Phase Multiplication Unit | **160C** Frequency Determination Unit |
| **120C** Signal Addition Unit | **170C** Time Zone Determination Unit |
| **190C** Second Signal Addition Unit | **180C** Time Duration Acquisition Unit |
| **140C** Analysis Result Output Unit | |

# FIG. 11

# FIG. 12

2000

$k$

# FIG. 13

100 (100A,100B,100C)

10001

Processor

10002

Memory

10003

Input/Output
Interface

10004

Communication
Circuit

# FIG. 14

100 (100A,100B,100C)

20001

Processing
Circuitry

20002

Memory

20003

Input/Output
Interface

20004

Communication
Circuit

## INTERNATIONAL SEARCH REPORT

International application No.

**PCT/JP2023/032300**

| | |
|---|---|
| **A. CLASSIFICATION OF SUBJECT MATTER** | |
| ***G06F 17/14*** (2006.01)i | |
| FI:   G06F17/14 580 | |

According to International Patent Classification (IPC) or to both national classification and IPC

**B. FIELDS SEARCHED**

Minimum documentation searched (classification system followed by classification symbols)

G06F17/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-296301 A (DENSO CORPORATION) 17 October 2003 (2003-10-17) paragraphs [0024]-[0074] | 1-7 |
| A | WO 2021/053779 A1 (MITSUBISHI ELECTRIC CORPORATION) 25 March 2021 (2021-03-25) paragraphs [0010]-[0073] | 1-7 |

☐ Further documents are listed in the continuation of Box C.   ☑ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 October 2023** | **07 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/032300**

| Patent document cited in search report | | | Publication date (day/month/year) | Patent family member(s) | Publication date (day/month/year) |
|---|---|---|---|---|---|
| JP | 2003-296301 | A | 17 October 2003 | (Family: none) | |
| WO | 2021/053779 | A1 | 25 March 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002103914 A

**Non-patent literature cited in the description**

- **T. GUO** ; **T. ZHANG** ; **E. LIM** ; **M. LOPEZ-BENITEZ** ; **F. MA** ; **L. YU**. A review of wavelet analysis and its applications: challenges and opportunities. *IEEE Access*, June 2022, vol. 10, 58869-58903